# EUROPÄISCHE PATENTSCHRIFT

(11) **EP 1 452 565 B1**
(45) Veröffentlichungstag und Bekanntmachung des Hinweises auf die Patenterteilung: **27.12.2006**
(21) Anmeldenummer: 04004109.7
(22) Anmeldetag: 24.02.2004
(51) Int. Cl.: C08L 95/00, C08L 53/02, C08K 5/20

(54) **Modifiziertes Bitumen und damit hergestellter Asphalt**
Modified bitumen and asphalt produced therefrom
Bitume modifié et asphalte fabriqué a partir de celui-ci

(30) Priorität: 26.02.2003 DE 10309494
(43) Veröffentlichungstag der Anmeldung: 01.09.2004
(73) Patentinhaber: GKG Mineraloel Handel GmbH & Co.KG, 70565 Stuttgart (DE)
(72) Erfinder:
(74) Vertreter: Mütschele, Thomas

(56) Entgegenhaltungen:
- WO-A-00/73378
- US-A- 3 660 126
- US-A- 4 554 023
- US-A- 5 019 610

## Beschreibung

Die Erfindung betrifft ein modifiziertes Bitumen, insbesondere für den Straßenbau, und einen mit diesem modifizierten Bitumen hergestellten Asphalt.

Bekanntlich handelt es sich bei Bitumen um aus Erdölen gewonnene schwerflüchtige, dunkelfarbige Gemische verschiedener organischer Substanzen. Je nach Zusammensetzung liegt Bitumen als halbfestes bis hartes Produkt vor, dessen viskoelastisches Verhalten sich mit der Temperatur ändert. Bitumen findet die verschiedensten Anwendungen, beispielsweise in Anstrichstoffen, im Bautenschutz, hauptsächlich aber als sogenanntes Straßenbaubitumen zur Herstellung von Asphalt für den Bau und die Erhaltung von Verkehrsflächen. Asphalt selbst besteht aus Mineralstoffen, Bitumen und gegebenenfalls Zusätzen. Im Asphalt erfüllt das Bitumen die Funktion eines Bindemittels zwischen den übrigen Komponenten, insbesondere den als Hauptbestandteil vorhandenen Mineralstoffen.

Es ist bereits seit längerem bekannt, Bitumen, insbesondere für die Anwendung im Straßenbau, mit verschiedenen Zusätzen zu modifizieren. In diesem Zusammenhang ist es auch üblich, dem Bitumen ein oder mehrere organische Polymere zuzusetzen. Hier kann es sich um thermoplastische, elastomere oder thermoelastische Kunststoffe als Zuschlagstoffe handeln. Man spricht dann von polymermodifiziertem Bitumen.

Ein Vertreter der für die Herstellung von polymermodifiziertem Bitumen verwendeten thermoelastischen Kunststoffe ist SBS (Styrol-Butadien-Styrol-Blockcopolymer mit linearer oder verzweigter Molekülstruktur). Handelsübliche SBS-Typen können auch Anteile an SB (Styrol-Butadien-Blockcopolymer) enthalten. Straßenbaubitumen wird mit SBS modifiziert, und die so erhaltenen Bindemittel werden zur Herstellung von Asphaltmischgut für den Verkehrsflächenbau verwendet. Solche Anwendungen sind beispielsweise durch die KRATON-Produkte der gleichnamigen britischen Firma oder durch die FINAPRENE-Produkte der Firma ATOFINA, Belgien offenbart. Hervorgehoben wird dabei das verbesserte elastische Rückstellvermögen der modifizierten Bitumen nach Zugbeanspruchung mit hoher Dehnung.

Polymermodifizierte Bitumen sind beispielsweise in der WO 00/73378 offenbart. Dort sind Bitumenzusammensetzungen angegeben, die neben Bitumen bis zu 15% eines Polymers und 0,05% bis 10% eines Amid-Additivs enthalten. Als Amid-Additiv wird bevorzugt Ethylen-bis-stearinsäureamid eingesetzt. Als Polymer sind unter anderem Neopren, SBR (styrene-butadienerubber), Naturgummi, EVA (etylene-vinyl acetate), SB (styrene-butadiene), SIS (styrene-isoprene-styrene) und SBS (Styrol-Butadien-Styrol-Blockcopolymer erwähnt.

Bei der Modifizierung von Straßenbaubitumen mit Polymeren, beispielsweise mit SBS, wird allerdings im Stand der Technik hervorgehoben, daß die Polymerkonzentrationen 2 Gew.-% nicht unterschreiten sollen.

Dementsprechend zeigt auch die Firmenschrift der Firma ATOFINA, Ausgabe 10/2000, über die FINAPRENE-Produkte, daß SBS-Gehalte von < 2 Masse-% technisch nicht von Interesse sind. Konzentrationen von < 2 Masse-% werden dort überhaupt nicht behandelt und sind in den Schaubildern auch nicht dargestellt. Ganz im Gegenteil werden für Asphaltschichten mit besonderen Anforderungen an die Verformungsbeständigkeit polymermodifizierte Bitumen mit deutlich höheren SBS-Gehalten eingesetzt.

Eine mit SBS modifizierte Asphaltzusammensetzung ist beispielsweise in der US-5,019,610 offenbart. Die Zusammensetzung weist einen Polymer-Anaid-Blend sowie einen Asphalt-Zement auf. Der Polymer-Amid-Blend weist 10-7.5 Gew.-% Polymeranteil und 90-25 Gew.-% mindestens eines Fettsäuredialkylamids auf Als Polymer ist ein SBS-Blockcopolymer besonders geeignet. Die verwendeten Fettsäuredialkylamide weisen die Struktur R₃-CO-N(R₁R₂) auf, wobei R₃ eine C₆-C₂₂- und R₁/R₂ jeweils eine C₁-C₈ Alkylgruppe darstellen.

Allerdings ist mit dem Zusatz von SBS zum Bitumen ein Anstieg der Viskosität des Bitumenbindemittels verbunden. Hierdurch wird entweder die Verarbeitung erschwert, oder sie muß von vorneherein bei höheren Temperaturen durchgeführt werden. Dementsprechend sind derartig modifizierte Bindemittel für eine Asphaltherstellung und Asphaltverarbeitung bei abgesenkter Temperatur, wie sie aus Gründen der Immissionsvermeidung, des Umweltschutzes sowie des Arbeitsschutzes angestrebt wird, nicht geeignet. Versucht man diesen Nachteil durch den Zusatz sogenannter Asphaltverflüssiger, wie Fischer-Tropsch-Paraffine oder Montanwachse, auszugleichen, so müssen diese in beträchtlichen Mengen, beispielsweise von 3 Masse-%, bezogen auf das polymermodifizierte Bindemittel, zugesetzt werden. Durch die damit verbundenen zusätzlichen Kosten wird dann allerdings die Wirtschaftlichkeit insgesamt in Frage gestellt.

Weiter ist es ebenfalls bekannt, Gemische aus Straßenbaubitumen und EBS als Bindemittel für Asphaltmischgut für den Verkehrsflächenbau zu verwenden. Bei EBS handelt es sich um Ethylen-bis-stearoylamid, das auch als Bis-stearoyl-ethylendiamin bezeichnet wird. Es handelt sich hier um ein Fettsäurederivat mit einem Tropfpunkt von ca. 140 °C, wie es zum Beispiel bei der Firma Clariant GmbH, Deutschland erhältlich ist. EBS bewirkt im Bitumen einen Anstieg des sogenannten Erweichungspunktes "Ring und Kugel" sowie einen Abfall der sogenannten Nadelpenetration, wodurch die Standfestigkeit der Asphaltmassen erhöht wird. Außerdem wird durch EBS eine Verringerung der Viskosität des Bindemittels und eine Verbesserung der Verarbeitbarkeit des Asphaltmischguts bewirkt.

Gemäß Stand der Technik beträgt die erforderliche Zusatzmenge an EBS zu Bitumen 3 Masse-%. Dabei wird ausdrücklich hervorgehoben, daß Anwendungsmengen unter 3 Masse-% im Bitumen eine zu geringe Eigenschaftsveränderung des Bitumens bewirken (siehe Firmenschrift der Clariant GmbH zu deren Produkt Licomont BS 100).

Aus der obigen Schilderung des Standes der Technik geht hervor, daß einzelne Zusätze zu Bitumen bekannt sind, die wiederum gezielt nur bestimmte Eigenschaften des Bitumen verändern. Nach dem derzeitigen Kenntnisstand müssen diese Zusatzstoffe auch in bestimmten Mengen zugegeben werden, um die gewünschte Eigenschaftsveränderung hervorzurufen.

Demgegenüber stellt sich die Erfindung die Aufgabe, die mit der Zugabe einzelner Zusatzstoffe verbundenen Nachteile zu vermeiden. Es soll dabei insbesondere ein modifiziertes Bitumen (als bituminöses Bindemittel für die-Herstellung von Asphalt) zur Verfügung gestellt werden, das einen Asphalt hoher Standfestigkeit bei gleichzeitig leichter Verarbeitbarkeit bereitstellt. Das modifizierte Bitumen soll ferner nach Zugbeanspruchung mit hoher Dehnung eine gute elastische Rückstellung besitzen und trotzdem mit wirtschaftlich vertretbarem Aufwand hergestellt werden können.

Diese Aufgabe wird gelöst durch das modifizierte Bitumen mit den Merkmalen des Anspruchs 1 und durch den Asphalt, der mit diesem modifizierten Bitumen herstellbar ist. Bevorzugte Ausführungen des erfindungsgemäßen Bitumen und des erfindungsgemäßen Asphalt sind in den abhängigen Ansprüchen 2 bis 6 bzw. 8 dargestellt. Der Wortlaut sämtlicher Ansprüche wird hiermit durch Bezugnahme zum Inhalt dieser Beschreibung gemacht.

Das beanspruchte modifizierte Bitumen ist erfindungsgemäß dadurch gekennzeichnet, daß es SBS in einer Menge von < 2 Masse-% und EBS in einer Menge zwischen 1,5 und 2,5 Masse-% enthält. Gegebenenfalls können weitere, dem Fachmann bekannte Zusatzstoffe im erfindungsgemäß modifizierten Bitumen enthalten sein. Bevorzugte Mengen an SBS liegen zwischen 1,2 und 1,6 Masse-%, wobei Mengen von ca. 1,5 Masse-% besonders hervorzuheben sind. Bevorzugte Mengen an EBS liegen erfindungsgemäß zwischen 1,7 und 2,3 Masse-%. Hier ist eine Menge von ca. 2 Masse-% als weiter bevorzugt zu nennen.

Die mit SBS und EBS definierten Stoffe wurden eingangs bereits erläutert. Wie erwähnt handelt es sich bei SBS um ein Styrol-Butadien-Styrol-Blockcopolymer. Die Moleküle besitzen Polystyrol-Endblöcke und je nach Typ einen linearen oder verzweigten Polybutadien-Mittelblock. Gegebenenfalls können die erfindungsgemäß eingesetzten handelsüblichen SBS-Typen auch Styrol-Butadien-Blockcopolymer enthalten. Als thermoelastischer Kunststoff verhält sich SBS bei Gebrauchstemperatur wie ein vulkanisierter Gummi, bei höheren Temperaturen wird er thermoplastartig weich. Dies ist darauf zurückzuführen, daß sich die Polystyrolblöcke unterhalb ca. 100 °C zu steifen Domänen assoziieren und sich ein dreidimensionales Netzwerk bildet, das oberhalb von 100 °C infolge Erweichung dieser Domänen verschwindet. Dieser Vorgang ist reversibel.

Bezogen auf seine Komponenten enthält das im modifizierten Bitumen verwendete SBS vorzugsweise 20 bis 40 Masse-% Styrol und 80 bis 60 Masse-% Butadien. Innerhalb dieser genannten Bereiche sind 25 bis 35 Masse-% Styrol bzw. 75 bis 65 Masse-% Butadien als weiter bevorzugt hervorzuheben.

Bei EBS handelt es sich wie erwähnt um das Fettsäurederivat Ethylen-bis-stearoylamid mit einem Tropfpunkt von ca. 140 °C.

Die Eigenschaften des erfindungsgemäß hergestellten modifizierten Bitumen unterscheiden sich deutlich von unmodifiziertem Bitumen vergleichbarer Härte. So liegt der Erweichungspunkt Ring und Kugel (gemessen nach DIN EN 1427) wesentlich höher und beträgt zwischen 75 °C und 95 °C. Bevorzugte Werte sind hier zwischen 85 °C und 90 °C. Auch zeigt es ein gutes elastisches Rückstellvermögen. Bezüglich der verbesserten Eigenschaften des erfindungsgemäßen Bitumen wird auf die später noch folgenden Beispiele verwiesen.

Der beanspruchte Asphalt ist erfindungsgemäß dadurch gekennzeichnet, daß er mit dem erfindungsgemäßen modifizierten Bitumen herstellbar bzw. hergestellt ist. Dabei ist das modifizierte Bitumen dem Asphalt bzw. der Asphaltmischung in üblichen Mengen zugesetzt. Vorzugsweise beträgt der Gehalt an modifiziertem Bitumen, das als Bindemittel im Asphalt dient, zwischen 1 und 10 Masse-%. Innerhalb dieses Bereiches sind Mengen zwischen 4 und 8 Masse-% besonders hervorzuheben.

Es soll nochmals ausdrücklich festgestellt werden, daß die erfindungsgemäße Modifizierung des Bitumens zu überraschenden Eigenschaften sowohl im modifizierten Bitumen selbst als auch in dem damit hergestellten Asphalt führt. Das erfindungsgemäß modifizierte Bitumen ist besonders geeignet für die Herstellung von Asphalten mit hoher Standfestigkeit. Es besitzt die gewünschte elastische Rückstellung und bringt diese in den Asphalt ein. Das Bindemittel ist in besonderer Weise für eine Asphaltbauweise mit abgesenkter Temperatur geeignet. Die mit dem erfindungsgemäßen Bitumen hergestellten Asphaltschichten sind in hohem Maße gebrauchstauglich. Ihr Widerstand gegen Verformungen durch wiederholte Belastungen rechtfertigt ihre Einstufung als hochstandfeste Asphaltmassen.

Die genannten und weitere Merkmale der Erfindung ergeben sich aus der nachfolgenden Beschreibung der Beispiele in Verbindung mit den Ansprüchen. Dabei können die einzelnen Merkmale jeweils für sich allein oder in Kombination miteinander verwirklicht sein.

### Beispiel 1

Ein erfindungsgemäßes modifiziertes Bitumen wird als bituminöses Bindemittel für Asphalt bei 180 °C unter scherenden Bedingungen aus den folgenden Komponenten hergestellt:
- 96,5 Masseteile Straßenbaubitumen der Sorte 50/70 nach DIN EN 12591 (Produkt SüBit 50/70 der Anmelderin),
- 1,5 Masseteile SBS mit linearer Struktur, Polystyrolgehalt 31 Masse-%, MFR 200/5 < 1 g/10 min (Produkt KRATON D-1101 CS der Firma KRATON Polymers GmbH, Eschborn, Deutschland), und
- 2,0 Masseteile EBS (Produkt Licomont BS 100 der Firma Clariant GmbH, Augsburg, Deutschland).

MFR: Die Abkürzung MFR steht für melt mass-flow rate. Die MFR ist international gebräuchlich zur Charakterisierung der Fließfähigkeit von Thermoplastschmelzen. Sie wird nach ISO 1133 bestimmt. Dabei wird die Schmelze bei einer bestimmten Temperatur mittels einer bestimmten Kraft durch eine definierte Kapillare (Düse mit festgelegten Abmessungen) ausgestoßen und die pro Zeiteinheit austretende Masse ermittelt. Das Ergebnis wird in g/10 min. angegeben. Ferner sind die Temperatur und die Kraft anzugeben. MFR 200/5 bedeutet also MFR bei 200 °C unter einer Belastung von 5 kp bestimmt.

Die Eigenschaften des erfindungsgemäßen Bindemittels sind in der folgenden Tabelle zusammengefaßt und denen eines etwa gleichharten Bitumens der Sorte 30/45 (Produkt SüBit 30/45 der Anmelderin) nach DIN EN 12591 gegenübergestellt.

| **Eigenschaft** | **Prüfmethode** | **Bindemittel gem. Erfindung** | **Vergleich** |
|---|---|---|---|
| Erweichungspunkt Ring und Kugel | DIN EN 1427 | 86 °C | 56 °C |
| Nadelpenetration 100/25/5 | DIN EN 1426 | 41 0,1 mm | 39 0,1 mm |
| Duktilität bei 25 °C | DIN 52 013 | > 100 cm | > 40 cm |
| Elastische Rückstellung bei 25 °C und 20 cm Fadenlänge | TL PmB, Ausgabe 2001, DIN V 52 021-1 | 51 % | < 5 % |
| EVT 100 | Aus kinemat. Viskosität nach DIN EN 12 595 | 167 °C | 194 °C |
| EVT 1000 | | 123 °C | 142 °C |

| | | | |
|---|---|---|---|
| TL PmB: Technische Lieferbedingungen für gebrauchsfertige polymermodifizierte Bitumen TL PmB, herausgegeben von der Forschungsgesellschaft für Straßen- und Verkehrswesen, Arbeitsgruppe Asphaltstraßen Ausgabe 2001 Bezugsquelle: FGSV-Verlag, Köln | | | |

Das Verfahren nach der deutschen Norm Duktilität nach DIN 52013 dient zur Erfassung des Fadenziehvermögens von Bitumen. Als Probekörper dient ein symmetrisch zur Mitte hin konisch verlaufender Körper mit 1 cm² Querschnittsfläche in Probenmitte. Der Probekörper wird im Wasserbad bei 25 °C mit einer konstanten Geschwindigkeit von 50 mm/min auseinandergezogen. Im Laufe der Verformung bildet sich aus dem Probekörper ein Faden. Beim Reißen des Fadens wird die erreichte Auszugslänge als Prüfergebnis angegeben.

Die elastische Rückstellung nach TL PmB, Ausgabe 2001, wird wie folgt bestimmt: Ein Probekörper nach DIN 52013 (siehe Prüfung der Duktilität) wird bei 25 °C und einer Ausziehgeschwindigkeit von 50 mm/min auf 200 mm Ausziehlänge verformt. Die während der Zugverformung aufgebaute Spannung läßt sich nach mittigem Auftrennen des Fadens als Rückstellung der Halbfäden verfolgen. Nach 30 min wird die Verkürzung der Halbfäden gemessen und als prozentualer Anteil der Fadenausgangslänge angegeben.

Insbesondere aufgrund der Ergebnisse der Nadelpenetration und des Erweichungspunktes Ring und Kugel ist das erfindungsgemäße Bindemittel als besonders geeignet für Asphalte mit hoher Standfestigkeit einzustufen. Darüber hinaus besitzt es die gewünschte elastische Rückstellung. Die im Vergleich zum Bitumen 30/45 deutlich niedrigeren Äquiviskositätstemperaturen, d. h. die Temperaturen, bei denen eine kinematische Viskosität von 100 mm²/s bzw. 1.000 mm²/s erreicht wird, zeigen, daß das Bindemittel für eine Asphaltbauweise mit abgesenkter Temperatur geeignet ist.

### Beispiel 2

Der Widerstand von Asphaltschichten gegen Verformungen durch wiederholte Belastungen ist ein wichtiges Merkmal ihrer Gebrauchstauglichkeit. Er hängt wesentlich vom verwendeten Bindemittel ab.

Um die Verformungsresistenz von Asphalt nachzuweisen, der mit dem erfindungsgemäßen Bindemittel festgestellt wurde, wurden Probekörper aus einem Asphaltbindermischgut 0/16 S nach ZTV Asphalt - StB 01 im Spurbildungsversuch (Technische Prüfvorschriften für Asphalt im Straßenbau TP A - StB, Teil: Spurbildungsversuch - Bestimmung der Spurrinnentiefe im Wasserbad) geprüft.

### Asphaltbinder 0/16 S

Das Mischgut hatte folgende Zusammensetzung:

**1. Mineralstoffe**

| | | | |
|---|---|---|---|
| Kornanteil | < 0,09 mm: | 6,6 M.-% | Dolomitsteinmehl |
| Kornanteil | 0,09 mm bis 2,0 mm: | 21,4 M.-% | Diabas-Edelbrechsand |
| Kornanteil | > 2,0 mm: | 72,0 M.-% | Diabas-Edelsplitt |

**2. Bindemittel**

| | |
|---|---|
| Bindemittelart: | modifiziertes Bindemittel aus Beispiel 1 |
| Bindemittelgehalt: | 4,6 M.-% |

**3. Mischgut**

| Marshall-Probekörper | |
|---|---|
| Verdichtungstemperatur: | 135 °C |
| Hohlraumgehalt: | 6,1 Vol.-% |

### Spurbildungsversuch

An zwei Probekörpern aus diesem Mischgut wurde der Spurbildungsversuch im Wasserbad bei 50 °C durchgeführt.
Nach 20.000 Überrollungen betrug die mittlere Spurrinnentiefe 1,5 mm (Einzelwerte 1,48 mm bzw. 1,52 mm).

Somit ist das Mischgut als hochstandfest einzustufen.

## Patentansprüche

1. Modifiziertes Bitumen, insbesondere für den Straßenbau, **dadurch gekennzeichnet, daß** es SBS (Styrol-Butadien-Styrol-Blockcopolymer) und EBS (Ethylen-bis-stearoylamid) enthält, wobei SBS in einer Menge von < 2 Masse-% und EBS in einer Menge zwischen 1,5 und 2,5 Masse-% enthalten ist.

2. Modifiziertes Bitumen nach Anspruch 1, **dadurch gekennzeichnet, daß** es 1,2 bis 1,6 Masse-% SBS, vorzugsweise ca. 1,5 Masse-% SBS enthält.

3. Modifiziertes Bitumen nach Anspruch 1 oder Anspruch 2, **dadurch gekennzeichnet, daß** es 1,7 bis 2,3 Masse-% EBS, vorzugsweise ca. 2 Masse-% EBS enthält.

4. Modifiziertes Bitumen nach einem der vorhergehenden Ansprüche, **dadurch gekennzeichnet, daß** das SBS 20 bis 40 Masse-% Styrol, vorzugsweise 25 bis 35 Masse-% Styrol, und 80 bis 60 Masse-% Butadien, vorzugsweise 75 bis 65 Masse-% Butadien enthält.

5. Modifiziertes Bitumen nach einem der vorhergehenden Ansprüche, **dadurch gekennzeichnet, daß** es einen Erweichungspunkt Ring und Kugel (nach DIN EN 1427) zwischen 75 °C und 95 °C, vorzugsweise zwischen 85 °C und 90 °C besitzt.

6. Modifiziertes Bitumen nach einem der vorhergehenden Ansprüche, **dadurch gekennzeichnet, daß** es eine elastische Rückstellung (nach DIN V 52021-1) von mindestens 40 %, vorzugsweise mindestens 50 % besitzt.

7. Asphalt, **dadurch gekennzeichnet, daß** er mit einem modifizierten Bitumen nach einem der vorhergehenden Ansprüche als Bindemittel hergestellt ist.

8. Asphalt nach Anspruch 7, **dadurch gekennzeichnet, daß** der Gehalt an modifiziertem Bitumen im Asphalt zwischen 1 und 10 Masse-%, vorzugsweise zwischen 4 und 8 Masse-% beträgt.

## Claims

1. Modified bitumen, in particular for road building, **characterized in that** it contains SBS (styrene-butadiene-styrene block copolymer) and EBS (ethylene-bis-stearoylamide), SBS in an amount of < 2% by mass and EBS in an amount between 1.5% and 2.5% by mass.

2. Modified bitumen according to Claim 1, **characterized in that** it contains 1.2% to 1.6% by mass of SBS, preferably about 1.5% by mass of SBS.

3. Modified bitumen according to Claim 1 or Claim 2, **characterized in that** it contains 1.7% to 2.3% by mass of EBS, preferably about 2% by mass of EBS.

4. Modified bitumen according to any one of the preceding claims, **characterized in that** the SBS contains 20% to 40% by mass of styrene, preferably 25% to 35% by mass of styrene, and 80% to 60% by mass of butadiene, preferably 75% to 65% by mass of butadiene.

5. Modified bitumen according to any one of the preceding claims, **characterized in that** it has a ring and ball softening point between 75°C and 95°C, preferably between 85°C and 90°C, according to DIN EN 1427.

6. Modified bitumen according to any one of the preceding claims, **characterized in that** it has a Preliminary DIN Standard 52021-1 elastic recovery of at least 40%, preferably at least 50%.

7. Asphalt, **characterized in that** it is produced using a modified bitumen according to any one of the preceding claims as a binder.

8. Asphalt according to Claim 7, **characterized in that** its modified bitumen content is between 1% and 10% by mass, preferably between 4% and 8% by mass.

## Revendications

1. Bitume modifié, en particulier destiné à la construction de routes, **caractérisé en ce qu'**il contient du SBS (copolymère à blocs de styrène-butadiène-styrène) et de l'EBS (éthylène-bis-stéaroylamide), le SBS étant contenu en une quantité <2% en masse et l'EBS en une quantité entre 1,5 et 2,5% en masse.

2. Bitume modifié selon la revendication 1, **caractérisé en ce qu'**il contient 1,2 à 1,6% en masse de SBS, de préférence environ 1,5% en masse de SBS.

3. Bitume modifié selon la revendication 1 ou la revendication 2, **caractérisé en ce qu'**il contient 1,7 à 2,3% en masse d'EBS, de préférence environ 2% en masse d'EBS.

4. Bitume modifié selon l'une quelconque des revendications précédentes, **caractérisé en ce que** le SBS contient 20 à 40% en masse de styrène, de préférence 25 à 35% en masse de styrène, et 80 à 60% en masse de butadiène, de préférence 75 à 65% en de butadiène.

5. Bitume modifié selon l'une quelconque des revendications précédentes, **caractérisé en ce qu'**il présente un point de ramollissement anneau et bille (selon la norme DIN EN 1427) entre 75°C et 95°C, de préférence entre 85°C et 90°C.

6. Bitume modifié selon l'une quelconque des revendications précédentes, **caractérisé en ce qu'**il présente une récupération élastique (selon la norme DIN V 52021-1) d'au moins 40%, de préférence d'au moins 50%.

7. Asphalte, **caractérisé en ce qu'**il est préparé avec un bitume modifié selon l'une quelconque des revendications précédentes comme liant.

8. Asphalte selon la revendication 7, **caractérisé en ce que** la teneur en bitume modifié dans l'asphalte est comprise entre 1 et 10% en masse, de préférence entre 4 et 8% en masse.
